(19) Europäisches Patentamt / European Patent Office / Office européen des brevets

(11) **EP 4 266 217 A1**

(12) **EUROPEAN PATENT APPLICATION**

(43) Date of publication:
**25.10.2023 Bulletin 2023/43**

(21) Application number: **23168700.5**

(22) Date of filing: **19.04.2023**

(51) International Patent Classification (IPC):
*G06N 3/044* (2023.01)

(52) Cooperative Patent Classification (CPC):
**G06N 3/044; G06N 3/0418**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.04.2022 CN 202210425537**

(71) Applicant: **Nokia Solutions and Networks Oy 02610 Espoo (FI)**

(72) Inventors:
- **HUANG, Xiao An**
  **Shanghai, 200000 (CN)**
- **ZHANG, Dong Xu**
  **Shanghai, 200129 (CN)**
- **HU, Xiao Feng**
  **Shanghai, 201200 (CN)**
- **ZHANG, Kai Bin**
  **Shanghai, 201204 (CN)**

(74) Representative: **DREISS Patentanwälte PartG mbB**
**Friedrichstraße 6**
**70174 Stuttgart (DE)**

(54) **METHOD, DEVICE AND SIGNAL EQUALIZER BASED ON SPARSE-READOUT RESERVOIR COMPUTING**

(57) The objective of the embodiments of the present application is to provide a method, device and signal equalizer based on sparse-readout reservoir computing. Said method comprises the following steps executed by a first communication device: when a predetermined trigger condition is met, generating the neural network parameters corresponding to a second communication device using an elastic linear regression method based on the channel condition information reported by said second communication device; sending said neural network parameters to the second communication device in order for the second communication device to perform the relevant configurations of sparse-readout reservoir computing based on the neural network parameters. Said method comprises the following steps executed by a second communication device: performing the relevant configurations of the sparse-readout reservoir computing method based on the neural network parameters from a first communication device; accordingly switching off the devices corresponding to the sparse part of readout layer based on said relevant configurations, so as to train said reservoir computing based on the non-sparse part of readout layer.

EP 4 266 217 A1

**Description**

Technical Field

The present invention relates to the field of communication technology, in particular to a method, device and signal equalizer based on sparse-readout reservoir computing (RC).

Background Art

RC has the advantage of being easy to train, which is very beneficial for the applications of photonics. The photonics-based hardware implementation of RC allows to make full use of the advantages of light (including high speed and low power consumption) for computational purposes. As a newly emerging technology, the non-linear equalizer based on RC is regarded as a powerful and adaptive equalization tool for compensating for the transmission impairments, including both linear and non-linear distortions, in the field of optical communication.

However, the readout layer in the RC solution based on the prior art is usually a full readout layer and has a large number of readout connections, which leads to the power consumption of the devices of the readout layer being rather high.

Summary of the Invention

The objective of the embodiments of the present application is to provide a method, device and signal equalizer based on sparse-readout reservoir computing.

In accordance with an embodiment of the present application, a method based on sparse-readout reservoir computing is provided, wherein the method is applied to a first communication device and comprises:

when a predetermined trigger condition is met, generating the neural network parameters corresponding to a second communication device using an elastic linear regression method based on the channel condition information reported by said second communication device;
sending said neural network parameters to the second communication device in order for the second communication device to perform the relevant configurations of sparse-readout reservoir computing based on the neural network parameters.

In accordance with an embodiment of the present application, a method for performing the relevant configurations of a sparse-readout reservoir computing method is provided, wherein said method is applied to a second communication device and comprises:

performing the relevant configurations of the sparse-readout reservoir computing method based on the neural network parameters from a first communication device;
accordingly switching off the devices corresponding to the sparse part of readout layer based on said relevant configurations.

In accordance with an embodiment of the present application, a first communication device is provided, wherein said first communication device comprises:

means for generating the neural network parameters corresponding to a second communication device using an elastic linear regression method based on the channel condition information reported by said second communication device when a predetermined trigger condition is met;
means for sending said neural network parameters to the second communication device in order for the second communication device to perform the relevant configurations of sparse-readout reservoir computing based on the neural network parameters.

In accordance with an embodiment of the present application, a second communication device is provided, wherein said second communication device comprises:

means for performing the relevant configurations of a sparse-readout reservoir computing method based on the neural network parameters from a first communication device;
means for accordingly switching off the devices corresponding to the sparse part of readout layer based on said relevant configurations.

In accordance with an embodiment of the present application, a signal equalizer is provided, wherein said signal equalizer is an adaptive signal equalizer based on a reservoir computing method, and said signal equalizer has a sparse readout layer.

In accordance with an embodiment of the present application, a first communication device is provided, wherein said first communication device comprises a processor and a memory with computer programs stored therein, and the following steps are carried out when said computer programs are executed by said processor:

> when a predetermined trigger condition is met, generating the neural network parameters corresponding to a second communication device using an elastic linear regression method based on the channel condition information reported by said second communication device;
> sending said neural network parameters to the second communication device in order for the second communication device to perform the relevant configurations of sparse-readout reservoir computing based on the neural network parameters.

In accordance with an embodiment of the present application, a second communication device is provided, wherein said second communication device comprises a processor and a memory with computer programs stored therein, and the following steps are carried out when said computer programs are executed by said processor:

> performing the relevant configurations of a sparse-readout reservoir computing method based on the neural network parameters from a first communication device;
> accordingly switching off the devices corresponding to the sparse part of readout layer based on said relevant configurations.

In accordance with an embodiment of the present application, a computer readable storage medium with computer programs stored therein is provided, wherein the following steps are carried out when the computer programs are executed by a first communication device:

> when a predetermined trigger condition is met, generating the neural network parameters corresponding to a second communication device using an elastic linear regression method based on the channel condition information reported by said second communication device;
> sending said neural network parameters to the second communication device in order for the second communication device to perform the relevant configurations of sparse-readout reservoir computing based on the neural network parameters.

In accordance with an embodiment of the present application, a computer readable storage medium with computer programs stored therein is provided, wherein the following steps are carried out when the computer programs are executed by a second communication device:

> performing the relevant configurations of a sparse-readout reservoir computing method based on the neural network parameters from a first communication device;
> accordingly switching off the devices corresponding to the sparse part of readout layer based on said relevant configurations.

In comparison with the prior art, the embodiments of the present application have the following advantages: by performing the relevant configurations of sparse-readout reservoir computing in the communication device, a much larger sparsity can be achieved while maintaining good BER (bit error rate) performance, and the power consumption of the devices of the readout layer can be reduced; by training the signal equalizer using an elastic linear regression algorithm, the complexity of the training of readout layer can be reduced.

Description of the Drawings

Through reading the detailed description of the non-limiting embodiments with reference to the following drawings, other features, objects and advantages of the present invention will become more obvious:

> Fig. 1 shows the flowchart of a method based on sparse-readout reservoir computing in accordance with the embodiments of the present application;
> Fig. 2(a) shows the schematic view of the readout layer of the conventional reservoir computing method;
> Fig. 2(b) shows the schematic view of the sparse readout layer of the reservoir computing method in accordance with the embodiments of the present application;

Fig. 3 shows the flowchart of the method in accordance with the embodiments of the present application executed by OLT and ONU;

Fig. 4(a) shows the schematic view of an example signal equalizer that supports random reservoir layer in accordance with the present embodiment;

Fig. 4(b) shows the schematic view of an example signal equalizer that supports deterministic reservoir layer in accordance with the present embodiment;

Fig. 5 shows the schematic structural views of a first communication device and a second communication device in accordance with the embodiments of the present application;

Fig. 6 shows the schematic structural views of OLT and ONU in accordance with the embodiments of the present application;

Fig. 7(a) shows the schematic comparison diagram of the performance results of the example experiments in accordance with the embodiments of the present application and the prior art solution;

Fig. 7(b) shows the schematic comparison diagram of the performance results of the example experiments in accordance with the embodiments of the present application and the prior art solution;

Fig. 8(a) shows the schematic view of the example hardware implementation in accordance with the embodiments of the present application;

Fig. 8(b) shows the schematic view of the example hardware implementation in accordance with the embodiments of the present application.

The same or similar reference numbers in the drawings represent the same or similar parts.

Detailed Description of the Embodiments

Before discussing example embodiments in more detail, it is noted that some example embodiments are described as processes or methods depicted by flowcharts. Although the flowcharts describe the operations as sequential processes, many of the operations may be executed in parallel, concurrently, or simultaneously. In addition, the order of operations may be re-arranged. The processes may be terminated when their operations are completed, but may also include additional steps not shown in the drawings. The processes may correspond to methods, functions, procedures, subroutines, subprograms, etc.

Methods discussed hereinafter, some of which are illustrated by flowcharts, may be implemented by hardware, software, firmware, middleware, microcode, hardware description languages, or any combination thereof. When implemented by software, firmware, middleware or microcode, the program code or code segments used to carry out the necessary tasks may be stored in a machine or computer readable medium, such as a storage medium. A processor(s) may carry out the necessary tasks.

The specific structural and functional details disclosed herein are merely representative and serve the purpose of describing example embodiments of the present invention. However, the present invention may be embodied in many alternative forms, and should not be construed as being limited to only the embodiments set forth herein.

It will be understood that although the terms 'first', 'second', etc. may be used herein to describe various elements, these elements should not be limited by these terms. These terms are used only to distinguish one element from another. For example, a first element could be termed a second element, and, similarly, a second element could be termed a first element, without departing from the scope of example embodiments. As used herein, the term 'and/or' includes any and all combinations of one or more of the associated items that are listed.

It will be understood that when an element is referred to as being 'connected' or 'coupled' to another element, it can be directly connected or coupled to the other element, or intervening elements may be present. In contrast, when an element is referred to as being 'directly connected' or 'directly coupled' to another element, there are no intervening elements present. Other words used to describe the relationship between elements should be interpreted in a like fashion (*e.g.,* 'between' versus 'directly between', 'adjacent' versus 'directly adjacent', etc.).

The terminology used herein is for the purpose of describing particular embodiments only and is not intended to be limiting of example embodiments. As used herein, the singular forms 'a', 'an' and 'the' are intended to include the plural forms as well unless clearly indicated otherwise in the context. It will be further understood that the terms 'comprises', 'comprising', 'includes' and/or 'including', when used herein, specify the presence of the stated features, integers, steps, operations, elements and/or components, and do not preclude the presence or addition of one or more other features, integers, steps, operations, elements, components and/or combinations thereof.

It should also be noted that in some alternative implementations, the functions/acts mentioned may occur out of the order denoted in the figures. For example, two figures shown in succession may actually be executed substantially simultaneously or may sometimes be executed in the reverse order, depending upon the functions/acts involved.

Unless otherwise defined, all terms (including technological and scientific terms) used herein have the same meaning as commonly understood by one of ordinary skill in the art to which the example embodiments belong. It will be further understood that terms, e.g., those defined in commonly used dictionaries, should be interpreted as having a meaning that is consistent with their meaning in the context of the related art and should not be interpreted in an idealized or overly formal sense unless expressly so defined herein.

The present invention will be described in more detail in the following in connection with the drawings.

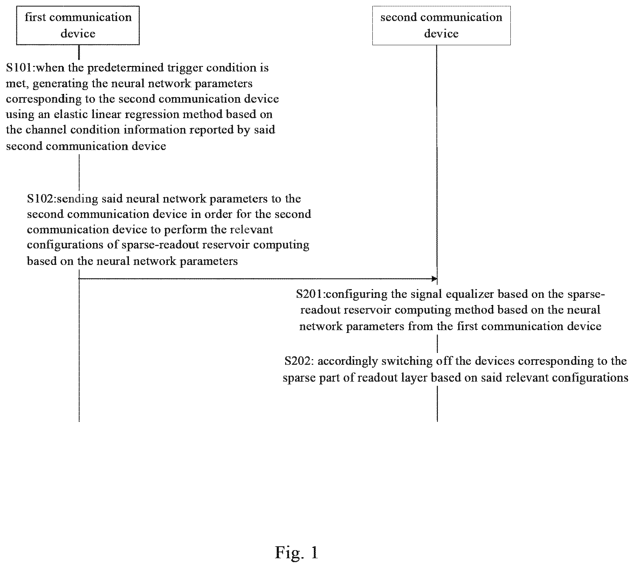

Fig. 1 shows the flowchart of a method based on sparse-readout reservoir computing in accordance with the embodiments of the present application.

Said method comprises step S101 and step S102 executed by a first communication device and step S201 and step S202 executed by a second communication device.

Wherein, said first communication device includes, but not limited to, optical line terminal (OLT) or base station (BS). Said second communication device includes, but not limited to, optical network unit (ONU) or user equipment (UE).

In accordance with an embodiment, said method further comprises step S103 (not shown in the figure) and step S104 (not shown in the figure) executed by the first communication device before step S101 and step S203 (not shown in the figure) executed by the second communication device.

In step S103, the first communication device monitors the state of one or more second communication devices.

In step S203, the second communication device reports its own channel condition information to the first communication device.

Wherein, said channel condition information includes various information for indication of channel conditions, e.g., fiber optic length, component bandwidth, signal to noise ratio, received optical power (ROP), etc.

In step S104, the first communication device receives the channel condition information reported by the second communication device.

With reference to Fig. 1 below, in step S101, when a predetermined trigger condition is met, the first communication device generates the neural network parameters corresponding to the second communication device using an elastic linear regression method based on the channel condition information reported by said second communication device.

Wherein, said predetermined trigger condition includes various conditions that may be used to trigger the reporting of the channel condition information by the second communication device.

For example, the predetermined trigger condition is that the second communication device is newly connected to the first communication device.

Wherein, said neural network parameters include but not limited to:

1) sparsity index;
2) elastic regression penalty parameter;
3) elastic regression regularization factor.

It should be apparent to those skilled in the art that various algorithms may be employed to generate the neural network parameters corresponding to said second communication device using an elastic linear regression method, and those skilled in the art may choose the appropriate algorithm to generate the neural network parameters corresponding to said second communication device based on actual needs, and therefore no elaboration is necessary here.

Continuing with reference to Fig. 1 below, in step S102, the first communication device sends said neural network parameters to the second communication device in order for the second communication device to perform the relevant configurations of sparse-readout reservoir computing (SRC) based on the neural network parameters.

Continuing with reference to Fig. 1, in step S201, the second communication device performs the relevant configurations of the sparse-readout reservoir computing method based on the neural network parameters from the first communication device.

Wherein, the network architecture of RC has three layers, including an input layer, a reservoir layer and a readout layer (or referred to as output layer).

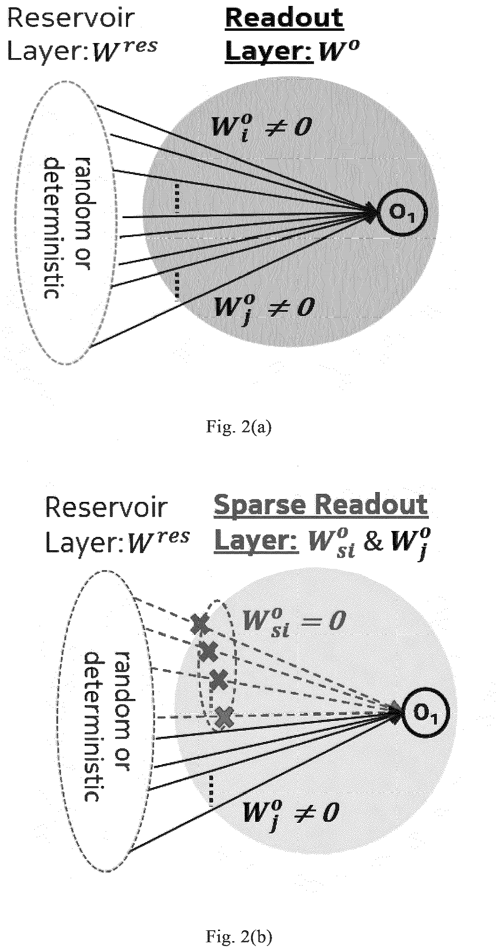

The sparse readout layer of the embodiments of the present application will be explained below with reference to Fig. 2(a) and Fig. 2(b).

Fig. 2(a) shows the schematic view of the readout layer of the conventional reservoir computing method. Fig. 2(b) shows the schematic view of the sparse readout layer of the reservoir computing method in accordance with the embodiments of the present application.

In both Figs. 2(a) and 2(b), the reservoir matrix of the reservoir layer of RC is represented by $W^{res}$, and the reservoir layer is random or deterministic.

In Fig. 2(a), the readout layer of RC is fully connected with the nodes of the reservoir layer, the weight matrix of the readout layer is represented by $W^o$, and both matrices are nonzero matrices.

In Fig. 2(b), the readout layer of RC is split into a sparse part and a non-sparse part, wherein the weight matrix of the sparse part is represented by $W^o_{si}$ , and $W^o_{si} = 0$ . The weight matrix of the non-sparse part is represented by $W^o_j$ , and $W^o_j \neq 0$ . Wherein, the sparse part is disconnected with the reservoir layer, and only the non-sparse part is connected with the reservoir layer.

Continuing the explanation with reference to Fig. 1, said relevant configurations include the hardware configuration of the second communication device.

Preferably, said relevant configurations include the configuration of the signal equalizer, and the second communication device configures the signal equalizer based on the sparse-readout reservoir computing method according to the neural network parameters.

In step S202, the second communication device accordingly switches off the devices corresponding to the sparse part of readout layer based on said relevant configurations.

In accordance with an embodiment, the second communication device switches off the devices corresponding to the sparse part of readout layer, so as to train said reservoir computing based on the non-sparse part of readout layer. Preferably, said second communication device trains said reservoir computing using an elastic linear regression method based on the non-sparse part of readout layer.

Wherein, said devices lie on the connections between the readout layer and the neurons of the respective reservoir layers.

Said devices include, but not limited to, optical modulator (OM), photodiode (PD) or analog-to-digital converter (ADC), etc.

In accordance with an embodiment, said devices of readout layer include multiple OMs, and said second communication device switches off accordingly the OMs corresponding to the sparse part of readout layer based on said relevant configurations.

In accordance with an embodiment, said devices of readout layer include a combination of multiple PDs and ADCs, and said second communication device switches off accordingly the PDs and ADCs corresponding to the sparse part of readout layer based on said relevant configurations.

In accordance with an embodiment, the corresponding 40% to 60% devices of readout layer can be switched off flexibly by means of said relevant configurations.

In accordance with an embodiment, said step S201 includes step S2011, and said method further comprises step S204 executed by the second communication device.

In step S2011, the second communication device configures the signal equalizer based on the sparse-readout reservoir computing method according to the neural network parameters from the first communication device.

Wherein, said signal equalizer based on the sparse-readout reservoir computing method supports random or deterministic reservoir layer.

In step S204, on basis of the configured signal equalizer, the second communication device trains said signal equalizer based on the non-sparse part of readout layer.

In accordance with an embodiment, the second communication trains said signal equalizer using an elastic linear regression method based on the non-sparse part of readout layer.

For example, the signal equalizer can be trained according to the elastic linear regression algorithm shown by formula (1).

$$min\{||Y_{target} - XW^o||^2_2 + \lambda \cdot l_1 \cdot ||W^o||_1 + \lambda \cdot (1 - l_1) \cdot ||W^o||^2_2\} \quad (1)$$

Wherein, $Y_{target}$ represents the target set matrix, $X$ represents the reservoir state vector, $W^o$ represents the output layer weight vector, $\lambda$ represents the elastic regression regularization factor, and $l_1$ represents the elastic regression penalty parameter.

By training the signal equalizer using an elastic linear regression algorithm, the complexity of readout layer is reduced, and the squared error of loss function is also reduced.

The method of the embodiments of the present application is explained below in connection with an embodiment.

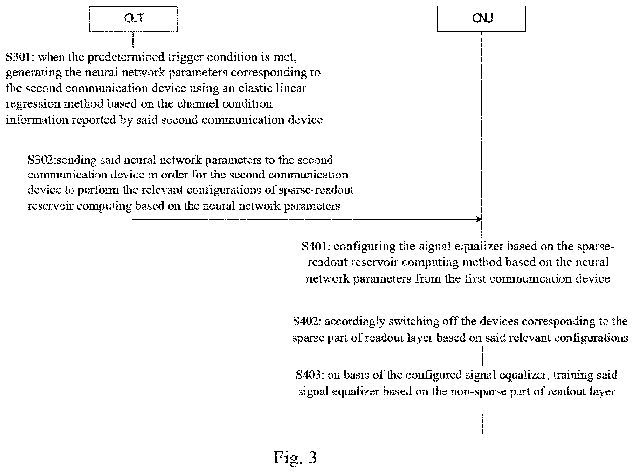

Fig. 3 shows the flowchart of the method in accordance with the embodiments of the present application executed by OLT and ONU.

Said method comprises step S301 and step S302 executed by an OLT and step S401, S402 and step S403 executed by an ONU.

The OLT monitors the state of one or more ONUs, and receives the channel condition information reported by an ONU. The channel condition information includes fiber optic length, component bandwidth, signal to noise ratio, received optical power (ROP), etc.

The OLT determines the ONU is a newly connected ONU and thereby determines a predetermined trigger condition is met, and generates the neural network parameters (denoted as NN_param) corresponding to said second communication device using an elastic linear regression method based on the channel condition information reported by the ONU. The neural network parameters include the sparsity index si, the elastic regression penalty parameter $l_1$, and the elastic regression regularization factor $\lambda$.

The OLT sends said neural network parameters to the second communication device in step S302, in order for the second communication device to perform the relevant configurations of sparse-readout reservoir computing based on the neural network parameters.

In step S401, the ONU configures the signal equalizer based on the sparse-readout reservoir computing method according to the neural network parameters NN_param (including si, $l_1$ and $\lambda$) from the OLT.

Wherein, said signal equalizer based on the sparse-readout reservoir computing method supports random or deterministic reservoir layer.

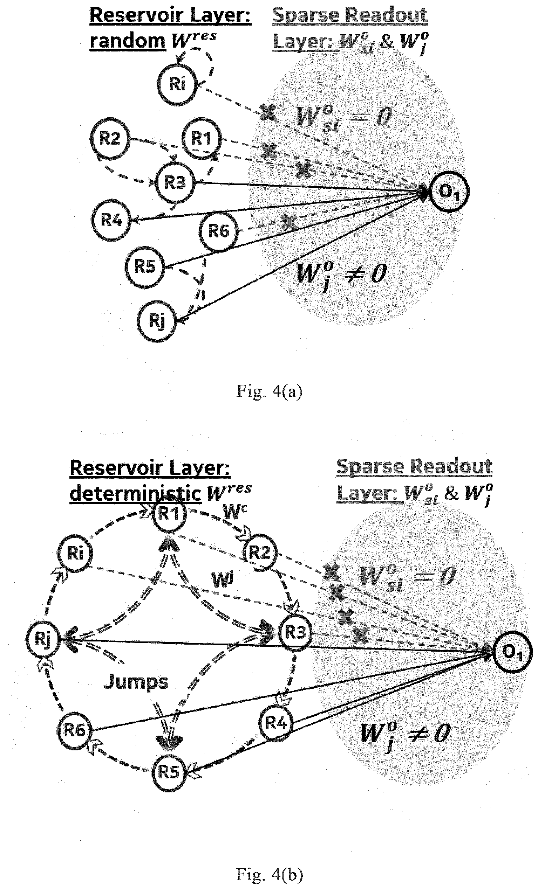

Fig. 4(a) and Fig. 4(b) show respectively the schematic views of an example signal equalizer that supports random reservoir layer and an example signal equalizer that supports deterministic reservoir layer in accordance with the present embodiment.

The SRC based signal equalizer shown in Fig. 4(a) has a random reservoir layer (hidden layer) and a sparse readout layer, denoted as RC_ SPA. The reservoir layer is composed of a random reservoir matrix $W^{res}$. Wherein, the number of inputs of the input layer is 17, and the neuron numbers of the hidden layer and the readout layer are 500 and 1 respectively, denoted as [17i, (500,1)].

The SRC based signal equalizer shown in Fig. 4(b) has a deterministic reservoir layer (hidden layer) and a sparse readout layer, denoted as DRJ_ SPA. The deterministic reservoir layer matrix $W^{res}$ is fixed and has the following characteristics: its nonzero elements include all the cyclic connections and all the bidirectional jumps which share the same weights $W^c \neq 0$ and $W^j \neq 0$ respectively (the rest of the elements of $W^{res}$ are all set to zero). Wherein, the number of inputs of the input layer is 17, and the neuron numbers of the hidden layer and the readout layer are 100 and 1 respectively, denoted as [17i, (100,1)].

Continuing with reference to Fig. 3 below, in step S402, the ONU accordingly switches off the devices corresponding to the sparse part of readout layer based on said relevant configurati ons.

In step S403, the ONU trains said signal equalizer using the elastic linear regression method described above in formula (1) based on the non-sparse part of readout layer.

It needs to be noted that the example described above is merely for the purpose of explaining the technical solution of the present invention and not intended to be limiting of the present invention. Those skilled in the art will understand that any implementation of the signal equalizer based on the sparse-readout reservoir computing method in accordance with the embodiments of the present application should be included within the scope of the present invention.

With the method in accordance with the embodiments of the present application, by performing the relevant configurations of sparse-readout reservoir computing in the communication device, a much larger sparsity can be achieved while maintaining good BER (bit error rate) performance, and the power consumption of the devices of the readout layer can be reduced; by training the signal equalizer using an elastic linear regression algorithm, the complexity of the training of readout layer can be reduced.

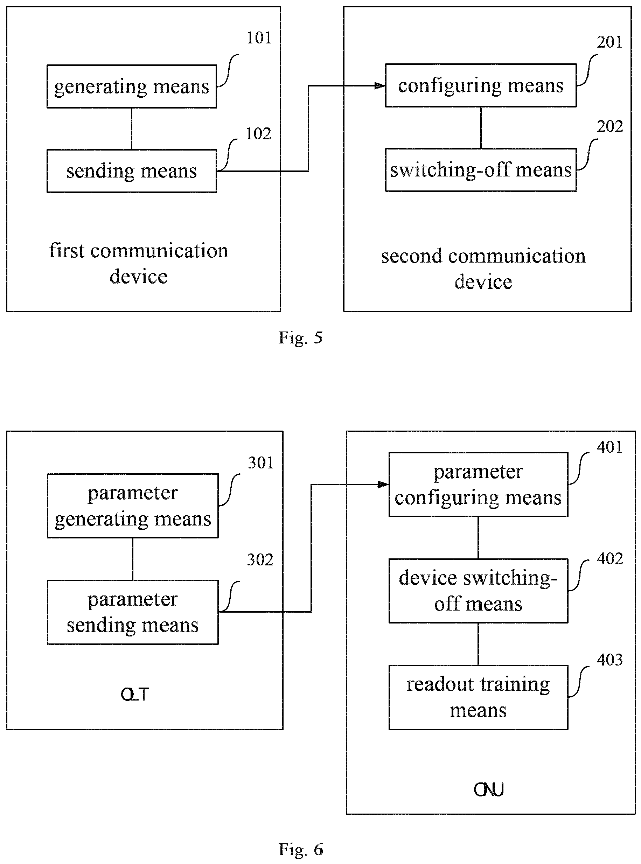

Fig. 5 shows the schematic structural views of a first communication device and a second communication device in accordance with the embodiments of the present application.

Said first communication device comprises generating means 101 and sending means 102. Said second communication device comprises configuring means 201 and switching-off means 202.

In accordance with an embodiment, the first communication device further comprises monitoring means (not shown in the figure) and receiving means (not shown in the figure), and the second communication device further comprises reporting means (not shown in the figure).

Before the operations executed by the generating means 101, the monitoring means monitors the state of one or more second communication devices.

The reporting means of the second communication device reports its own channel condition information to the first communication device.

Wherein, said channel condition information includes various information for indication of channel conditions, e.g., fiber optic length, component bandwidth, signal to noise ratio, received optical power (ROP), etc.

Next, the receiving means of the first communication device receives the channel condition information reported by the second communication device.

With reference to Fig. 5 below, when a predetermined trigger condition is met, the generating means 101 generates the neural network parameters corresponding to the second communication device using an elastic linear regression method based on the channel condition information reported by said second communication device.

Wherein, said predetermined trigger condition includes various conditions that may be used to trigger the reporting of the channel condition information by the second communication device.

For example, the predetermined trigger condition is that the second communication device is newly connected to the first communication device.

Wherein, said neural network parameters include but not limited to:

1) sparsity index;
2) elastic regression penalty parameter;
3) elastic regression regularization factor.

It should be apparent to those skilled in the art that various algorithms may be employed to generate the neural network parameters corresponding to said second communication device using an elastic linear regression method, and those skilled in the art may choose the appropriate algorithm to generate the neural network parameters corresponding to said second communication device based on actual needs, and therefore no elaboration is necessary here.

The sending means 102 sends said neural network parameters to the second communication device in order for the second communication device to perform the relevant configurations of sparse-readout reservoir computing based on the neural network parameters.

Next, the configuring means 201 performs the relevant configurations of the sparse-readout reservoir computing method based on the neural network parameters from the first communication device.

Wherein, the network architecture of RC has three layers, including an input layer, a reservoir layer and a readout layer (or referred to as output layer).

Wherein, said relevant configurations include the hardware configuration of the second communication device.

Preferably, said relevant configurations include the configuration of the signal equalizer, and the second communication device configures the signal equalizer based on the sparse-readout reservoir computing method according to the neural network parameters.

The switching-off means 202 accordingly switches off the devices corresponding to the sparse part of readout layer based on said relevant configurations.

In accordance with an embodiment, the second communication device switches off the devices corresponding to the sparse part of readout layer, so as to train said reservoir computing based on the non-sparse part of readout layer. Preferably, said second communication device trains said reservoir computing using an elastic linear regression method based on the non-sparse part of readout layer.

Wherein, said devices lie on the connections between the readout layer and the neurons of the respective reservoir layers.

Said devices include, but not limited to, optical modulator (OM), photodiode (PD) or analog-to-digital converter (ADC), etc.

In accordance with an embodiment, said devices of readout layer include multiple OMs, and said second communication device switches off accordingly the OMs corresponding to the sparse part of readout layer based on said relevant configurations.

In accordance with an embodiment, said devices of readout layer include a combination of multiple PDs and ADCs, and said second communication device switches off accordingly the PDs and ADCs corresponding to the sparse part of readout layer based on said relevant configurations.

In accordance with an embodiment, the corresponding 40% to 60% devices of readout layer can be switched off flexibly by means of said relevant configurations.

In accordance with an embodiment, said second communication device further comprises training means (not shown in the figure).

The configuring means 201 configures the signal equalizer based on the sparse-readout reservoir computing method according to the neural network parameters from the first communication device.

Wherein, said signal equalizer based on the sparse-readout reservoir computing method supports random or deterministic reservoir layer.

On basis of the configured signal equalizer, the training means 204 trains said signal equalizer based on the non-sparse part of readout layer.

In accordance with an embodiment, the second communication trains said signal equalizer using an elastic linear regression method based on the non-sparse part of readout layer.

By training the signal equalizer using an elastic linear regression algorithm, the complexity of readout layer is reduced, and the squared error of loss function is also reduced.

The means of the embodiments of the present application will be explained below in connection with an embodiment.

Fig. 6 shows the schematic structural views of OLT and ONU in accordance with the embodiments of the present application.

The OLT in accordance with the present embodiment comprises parameter generating means 301 and parameter sending means 302. The ONU in accordance with the present embodiment comprises parameter configuring means 401, device switching-off means 402 and readout training means 403.

The OLT monitors the state of one or more ONUs, and receives the channel condition information reported by an ONU. The channel condition information includes fiber optic length, component bandwidth, signal to noise ratio, received optical power (ROP), etc.

The OLT determines the ONU is a newly connected ONU and thereby determines a predetermined trigger condition is met, and the parameter generating means 301 generates the neural network parameters (denoted as NN_param) corresponding to said second communication device using an elastic linear regression method based on the channel condition information reported by the ONU. The neural network parameters include the sparsity index si, the elastic regression penalty parameter $l_1$, and the elastic regression regularization factor $\lambda$.

The parameter sending means 302 sends said neural network parameters to the second communication device, in order for the second communication device to perform the relevant configurations of sparse-readout reservoir computing based on the neural network parameters.

The parameter configuring means 401 of the ONU configures the signal equalizer based on the sparse-readout reservoir computing method according to the neural network parameters NN_param (including si, $l_1$ and $\lambda$) from the OLT.

Wherein, said signal equalizer based on the sparse-readout reservoir computing method supports random or deterministic reservoir layer.

The device switching-off means 402 accordingly switches off the devices corresponding to the sparse part of readout layer based on said relevant configurations.

The readout training means 403 trains said signal equalizer using the elastic linear regression method described above in formula (1) based on the non-sparse part of readout layer.

It needs to be noted that the example described above is merely for the purpose of explaining the technical solution of the present invention and not intended to be limiting of the present invention. Those skilled in the art will understand that any implementation of the signal equalizer based on the sparse-readout reservoir computing method in accordance with the embodiments of the present application should be included within the scope of the present invention.

With the means in accordance with the embodiments of the present application, by performing the relevant configurations of sparse-readout reservoir computing in the communication device, a much larger sparsity can be achieved while maintaining good BER (bit error rate) performance, and the power consumption of the devices of the readout layer can be reduced; by training the signal equalizer using an elastic linear regression algorithm, the complexity of the training of readout layer can be reduced.

The effect of the solution in accordance with the embodiments of the present application on the performance will be explained below in connection with an example experiment.

Wherein, the experiment is designed for testing the performance of the embodiments of the present application, and is carried out in a 100-Gb/s/$\lambda$ PAM4-based intensity modulation and direct detection (IMDD) passive optical network (PON). On the transmitter side (Tx), a DFB laser is externally intensity-modulated by a Mach-Zehnder Modulator (MZM) using a 50-GBaud PAM4 signal. After 20-km SSMF transmission, a variable optical attenuator (VOA) is applied for changing the sensitivity on the receiver side accordingly. The optical signal is directly detected by a 25-GHz photodiode (PD). The detected signal is then sampled by a digital sample oscilloscope (DSO) with a 59-GHz bandwidth and a 160-GSa/s sample rate. The sampled signal then undergoes offline processing. The offline processing includes resampling to 50-GSa/s and the training of the SRC-based signal equalizer in accordance with the embodiments of the present application.

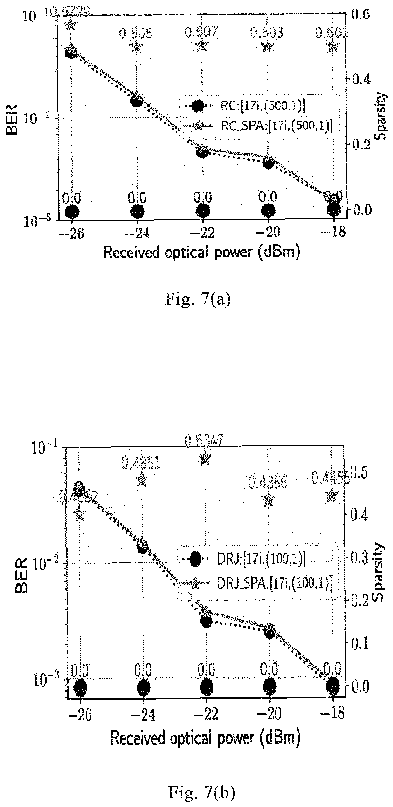

Fig. 7(a) and Fig. 7(b) show the schematic comparison diagrams of the performance results of the example experiments in accordance with the embodiments of the present application and the prior art solution.

Wherein, the performance result of the experiment shown in Fig. 7(a) corresponds to the SRC-based signal equalizer shown in Fig. 4(a) which supports random reservoir layer. The performance result of the experiment shown in Fig. 7(b) corresponds to the SRC-based signal equalizer shown in Fig. 4(b) which supports deterministic reservoir layer.

In both Fig. 7(a) and Fig. 7(b), data of the solution in accordance with the embodiments of the present application is shown in solid line, and data of the prior art RC solution is shown in dashed line. It can be seen that, in comparison with the prior art RC solution, the RC_SPA solution and the DRJ_SPA solution based on the embodiments of the present application both achieve a much larger sparsity while maintaining good bit error rate (BER) performance. In addition, the power consumption can be greatly reduced with the RC_SPA solution and the DRJ_SPA solution.

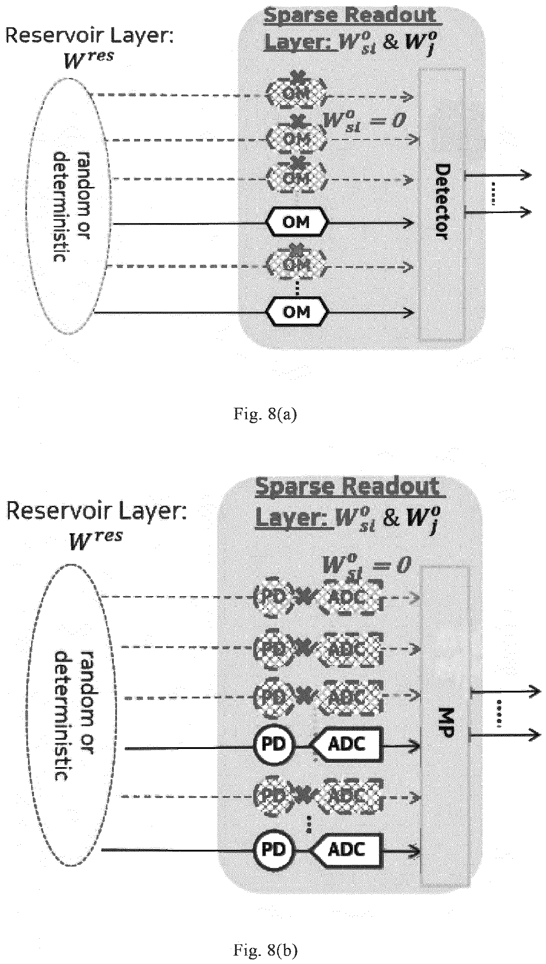

Fig. 8(a) and Fig. 8(b) show the schematic views of the example hardware implementations in accordance with the embodiments of the present application;

The reservoir matrix of the reservoir layer of RC is represented by $W^{res}$ in both of the two implementations shown in Fig. 8(a) and Fig. 8(b), and the reservoir layer is random or deterministic. In addition, the readout layer of RC in both implementations is a sparse readout, the description of which is similar to Fig. 2(b) described above, and therefore no elaboration is necessary here.

The hardware structure corresponding to the sparse readout layer shown in Fig. 8(a) includes a detector and multiple OMs, the output result of which is single or parallel. Wherein the part shown in solid line represents the non-sparse part of readout layer, and the part shown in dashed line represents the sparse part of readout layer with its corresponding OMs to be switched off.

The hardware structure corresponding to the sparse readout layer shown in Fig. 8(b) includes a microprocessor (MP) and a combination of multiple PDs and ADCs, the output result of which is single or parallel. Wherein the part shown in solid line represents the non-sparse part of readout layer, and the part shown in dashed line represents the sparse part of readout layer with its corresponding PDs and ADCs to be switched off.

The software programs of the present invention may be executed by a processor to implement the steps or functions described hereinabove. Likewise, the software programs of the present invention (including the relevant data structures) may be stored in a computer readable recording medium, such as RAM memory, magnetic or optical drive, floppy disk, and other similar devices. In addition, some steps or functions of the present invention may be implemented by hardware, for example, as a circuit cooperating with a processor to execute various functions or steps.

In addition, at least a portion of the present invention may be applied as a computer program product, for example, computer program instructions which, when executed by a computer, may invoke or provide the methods and/or technical solutions in accordance with the present invention through operations of the computer. Furthermore, the program instructions invoking the methods of the present invention may be stored in a fixed or mobile recording medium, and/or transmitted through broadcast or data flow in other signal bearing media, and/or stored in a working memory of a computer device which operates according to the program instructions. Here, an embodiment in accordance with the present invention includes an apparatus, and the apparatus comprises a memory for storing computer program instructions and a processor for executing the program instructions. Wherein, the computer program instructions, when executed by the processor, trigger the apparatus to carry out the methods and/or technical solutions described above in accordance with the embodiments of the present invention.

To those skilled in the art, it is apparent that the present invention is not limited to the details of the illustrative embodiments mentioned above, and can be implemented in other specific forms without departing from the spirit or basic features of the present invention. Therefore, from any perspective, the embodiments should be regarded as illustrative and not restrictive. The scope of the present invention is defined by the appended claims and not the depiction above. Therefore, all variations within the meaning and scope of equivalent elements of the claims are intended to be encompassed within the present invention. No reference numerals in the claims should be regarded as limiting the involved claims. In addition, it is apparent that the word 'comprise' or 'include' does not exclude other units or steps, and singularity does not exclude plurality. A plurality of units or apparatuses stated in a system claim may also be implemented by a single unit or apparatus through software or hardware. Words like 'first' and 'second' are used to indicate names and not to indicate any specific order.

**Claims**

1. A method based on sparse-readout reservoir computing, which is applied to a first communication device, wherein the method comprises:

   when a predetermined trigger condition is met, generating (S101) the neural network parameters corresponding to a second communication device using an elastic linear regression method based on the channel condition information reported by said second communication device;
   sending (S102) said neural network parameters to the second communication device in order for the second communication device to perform the relevant configurations of sparse-readout reservoir computing based on the neural network parameters.

2. The method according to Claim 1, wherein said neural network parameters include:

   sparsity index;
   elastic regression penalty parameter;
   elastic regression regularization factor.

3. The method according to Claim 1, wherein said method comprises:

   monitoring the state of one or more second communication devices;

receiving the channel condition information reported by the second communication device itself.

4. A method for performing the relevant configurations of a sparse-readout reservoir computing method, which is applied to a second communication device, wherein said method comprises:

   performing the relevant configurations of the sparse-readout reservoir computing method based on the neural network parameters from a first communication device;
   accordingly switching off the devices corresponding to the sparse part of readout layer based on said relevant configurations.

5. The method according to Claim 4, wherein said performing the relevant configurations of the sparse-readout reservoir computing method based on the neural network parameters from a first communication device comprises:

   configuring (S401) a signal equalizer based on the sparse-readout reservoir computing method according to the neural network parameters from the first communication device, wherein said signal equalizer based on the sparse-readout reservoir computing method supports random or deterministic reservoir layer;
   wherein said method comprises:
   on basis of the configured signal equalizer, training (S403) said signal equalizer based on the non-sparse part of readout layer.

6. The method according to Claim 5, wherein said training said signal equalizer based on the non-sparse part of readout layer comprises:
   training said signal equalizer using an elastic linear regression method based on the non-sparse part of readout layer.

7. A first communication device, wherein said first communication device comprises:

   means (101) for generating the neural network parameters corresponding to a second communication device using an elastic linear regression method based on the channel condition information reported by said second communication device when a predetermined trigger condition is met;
   means (102) for sending said neural network parameters to the second communication device in order for the second communication device to perform the relevant configurations of sparse-readout reservoir computing based on the neural network parameters.

8. A second communication device, wherein said second communication device comprises:

   means (201) for performing the relevant configurations of a sparse-readout reservoir computing method based on the neural network parameters from a first communication device;
   means (202) for accordingly switching off the devices corresponding to the sparse part of readout layer based on said relevant configurations.

9. The second communication device according to Claim 8, wherein said means (201) for performing the relevant configurations of a sparse-readout reservoir computing method based on the neural network parameters from a first communication device is used for:

   configuring a signal equalizer based on the sparse-readout reservoir computing method according to the neural network parameters from the first communication device, wherein said signal equalizer based on the sparse-readout reservoir computing method supports random or deterministic reservoir layer;
   wherein said second communication device comprises:
   means for training said signal equalizer based on the non-sparse part of readout layer on basis of the configured signal equalizer.

10. A signal equalizer, wherein said signal equalizer is an adaptive signal equalizer based on a reservoir computing method, and said signal equalizer has a sparse readout layer.

11. The signal equalizer according to Claim 10, wherein said signal equalizer supports random or deterministic reservoir layer.

12. A first communication device, wherein said first communication device comprises a processor and a memory with computer programs stored therein, and the following steps are carried out when said computer programs are executed by said processor:

when a predetermined trigger condition is met, generating the neural network parameters corresponding to a second communication device using an elastic linear regression method based on the channel condition information reported by said second communication device;

sending said neural network parameters to the second communication device in order for the second communication device to perform the relevant configurations of sparse-readout reservoir computing based on the neural network parameters.

13. A second communication device, wherein said second communication device comprises a processor and a memory with computer programs stored therein, and the following steps are carried out when said computer programs are executed by said processor:

performing the relevant configurations of a sparse-readout reservoir computing method based on the neural network parameters from a first communication device;

accordingly switching off the devices corresponding to the sparse part of readout layer based on said relevant configurations.

14. A computer readable storage medium with computer programs stored therein, wherein the following steps are carried out when the computer programs are executed by a first communication device:

when a predetermined trigger condition is met, generating the neural network parameters corresponding to a second communication device using an elastic linear regression method based on the channel condition information reported by said second communication device;

sending said neural network parameters to the second communication device in order for the second communication device to perform the relevant configurations of sparse-readout reservoir computing based on the neural network parameters.

15. A computer readable storage medium with computer programs stored therein, wherein the following steps are carried out when the computer programs are executed by a second communication device:

performing the relevant configurations of a sparse-readout reservoir computing method based on the neural network parameters from a first communication device;

accordingly switching off the devices corresponding to the sparse part of readout layer based on said relevant configurations.

first communication
device

second communication
device

S101:when the predetermined trigger condition is
met, generating the neural network parameters
corresponding to the second communication device
using an elastic linear regression method based on
the channel condition information reported by said
second communication device

S102:sending said neural network parameters to the
second communication device in order for the second
communication device to perform the relevant
configurations of sparse-readout reservoir computing
based on the neural network parameters

S201:configuring the signal equalizer based on the sparse-
readout reservoir computing method based on the neural
network parameters from the first communication device

S202: accordingly switching off the devices corresponding to the
sparse part of readout layer based on said relevant configurations

Fig. 1

Reservoir
Layer: $W^{res}$

**Readout**
**Layer: $W^o$**

$W_i^o \neq 0$

random or
deterministic

$O_1$

$W_j^o \neq 0$

Fig. 2(a)

Reservoir
Layer: $W^{res}$

**Sparse Readout**
**Layer: $W_{si}^o$ & $W_j^o$**

$W_{si}^o = 0$

random or
deterministic

$O_1$

$W_j^o \neq 0$

Fig. 2(b)

```
            ┌──────────────┐                              ┌──────────────┐
            │      OLT     │                              │     ONU      │
            └──────┬───────┘                              └──────┬───────┘
```

S301: when the predetermined trigger condition is met, generating the neural network parameters corresponding to the second communication device using an elastic linear regression method based on the channel condition information reported by said second communication device

S302:sending said neural network parameters to the second communication device in order for the second communication device to perform the relevant configurations of sparse-readout reservoir computing based on the neural network parameters

S401: configuring the signal equalizer based on the sparse-readout reservoir computing method based on the neural network parameters from the first communication device

S402: accordingly switching off the devices corresponding to the sparse part of readout layer based on said relevant configurations

S403: on basis of the configured signal equalizer, training said signal equalizer based on the non-sparse part of readout layer

## Fig. 3

Fig. 4(a)

Fig. 4(b)

Fig. 5

Fig. 6

Fig. 7(a)

Fig. 7(b)

Fig. 8(a)

Fig. 8(b)

**EUROPEAN SEARCH REPORT**

Europäisches
Patentamt
European
Patent Office
Office européen
des brevets

Application Number

EP 23 16 8700

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DA ROS FRANCESCO ET AL: "Reservoir-Computing Based Equalization With Optical Pre-Processing for Short-Reach Optical Transmission", IEEE JOURNAL OF SELECTED TOPICS IN QUANTUM ELECTRONICS, IEEE, USA, vol. 26, no. 5, 28 February 2020 (2020-02-28), pages 1-12, XP011783312, ISSN: 1077-260X, DOI: 10.1109/JSTQE.2020.2975607 [retrieved on 2020-04-15] * page 1 - page 10 * ----- | 1-15 | INV. G06N3/044 |
| A | LUCA MANNESCHI ET AL: "SpaRCe: Improved Learning of Reservoir Computing Systems through Sparse Representations", ARXIV.ORG, CORNELL UNIVERSITY LIBRARY, 201 OLIN LIBRARY CORNELL UNIVERSITY ITHACA, NY 14853, 18 April 2021 (2021-04-18), XP081923034, * the whole document * ----- | 1-15 | |
| A | HUANG XIAOAN ET AL: "Low-Complexity Recurrent Neural Network Based Equalizer With Embedded Parallelization for 100-Gbit/s/[lambda] PON", JOURNAL OF LIGHTWAVE TECHNOLOGY, IEEE, USA, vol. 40, no. 5, 17 November 2021 (2021-11-17), pages 1353-1359, XP011901569, ISSN: 0733-8724, DOI: 10.1109/JLT.2021.3128579 [retrieved on 2022-02-27] * the whole document * ----- | 1-15 | TECHNICAL FIELDS SEARCHED (IPC) G06N |

-/--

The present search report has been drawn up for all claims

| Place of search | Date of completion of the search | Examiner |
|---|---|---|
| The Hague | 7 September 2023 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 23 16 8700

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 10 162 378 B1 (RAO SHANKAR R [US] ET AL) 25 December 2018 (2018-12-25) * the whole document * | 1-15 | |
| A | US 2019/205742 A1 (TAKEDA SEIJI [JP] ET AL) 4 July 2019 (2019-07-04) * the whole document * | 1-15 | |
| X,P | HUANG XIAOAN ET AL: "A Sparse-Readout Reservoir-Computing Based Equalizer for 100 Gb/s/[lambda] PON", 2022 EUROPEAN CONFERENCE ON OPTICAL COMMUNICATION (ECOC), OPTICA, 18 September 2022 (2022-09-18), pages 1-4, XP034251915, [retrieved on 2022-12-20] * the whole document * | 1-15 | |

TECHNICAL FIELDS
SEARCHED      (IPC)

The present search report has been drawn up for all claims

| Place of search | Date of completion of the search | Examiner |
|---|---|---|
| The Hague | 7 September 2023 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 8700

This annex lists the patent family members relating to the patent documents cited in the above-mentioned European search report.
The members are as contained in the European Patent Office EDP file on
The European Patent Office is in no way liable for these particulars which are merely given for the purpose of information.

07-09-2023

| Patent document cited in search report | | Publication date | Patent family member(s) | Publication date |
|---|---|---|---|---|
| US 10162378 | B1 | 25-12-2018 | NONE | |
| US 2019205742 | A1 | 04-07-2019 | NONE | |

For more details about this annex : see Official Journal of the European Patent Office, No. 12/82